# EUROPÄISCHE PATENTSCHRIFT

(11) **EP 1 453 663 B1**
(45) Veröffentlichungstag und Bekanntmachung des Hinweises auf die Patenterteilung: **24.01.2007**
(21) Anmeldenummer: 02794995.7
(22) Anmeldetag: 13.12.2002
(51) Int. Cl.: B29D 31/508, A43B 3/12, A43B 9/18

(54) **VERFAHREN ZUR HERSTELLUNG EINES SCHUHES UND SCHUH**
METHOD FOR PRODUCING A SHOE AND SHOE
PROCEDE POUR LA PRODUCTION D'UNE CHAUSSURE ET CHAUSSURE

(30) Priorität: 13.12.2001 DE 10161164
(43) Veröffentlichungstag der Anmeldung: 08.09.2004
(73) Patentinhaber: ALSA GmbH, D-36396 Steinau-Uerzell (DE)
(72) Erfinder: HERBER, Karl-Heinrich, 36391 Sinntal-Mottgers (DE); SCHMALBACH, Erwin, 36355 Grebenhain-Crainfeld (DE)
(74) Vertreter: Hebing, Norbert
(86) Internationale Anmeldenummer: PCT/DE2002/004578
(87) Internationale Veröffentlichungsnummer: WO 2003/049933

(56) Entgegenhaltungen:
- EP-A- 0 734 844
- EP-A- 1 264 554
- CH-A- 343 844
- FR-A- 1 191 875
- FR-A- 2 762 488
- US-A- 4 032 611

## Beschreibung

Die Erfindung betrifft ein Verfahren zur Herstellung eines Schuhes, bei dem in eine zur Erzeugung eines Schuhbodens dienende Hohlform Bereiche eines Schaftes ragen und dort durch ein Fixiermittel gegen eine Seitenwand der Hohlform gehalten werden, so dass sich die Bereiche des Schaftes nach dem Einfüllen eines den Schuhboden bildenden, Korkteilchen oder dergleichen enthaltenden Materials und Aufsetzen einer Oberform mit dem Schuhboden verbinden. Weiterhin betrifft die Erfindung einen nach diesem Verfahren herstellbaren Schuh.

Ein Verfahren der vorstehenden Art ist in der DE 195 11 942 A1 beschrieben. Die bei diesem Verfahren zu verwendende Hohlform hat als Fixiermittel für die Seitenteile eines Schaftes Taschen und Halterahmen, die die Seitenteile halten, bis das Schuhbodenmaterial in die Form eingegeben und sich mit den Seitenteilen verbunden hat. Die Gestaltung der Hohlform ist durch die Taschen und Halterahmen sehr aufwändig und deshalb teuer. Weiterhin entsteht dadurch der Nachteil, dass durch die Gestaltung der Taschen und des Halterahmens die Form des Schaftes festgelegt wird, so dass die Hohlform nicht für anders gestaltete Schuhe zu verwenden ist. Wenn das Material für den Schuhboden des nach diesem Verfahren erzeugten Schuhes keine ausreichende Abriebfestigkeit besitzt, dann klebt man gegen die Unterseite des Schuhbodens eine Laufsohle. Dieser Klebevorgang ist jedoch arbeitsintensiv und oftmals unerwünscht, weil dabei Lösungsmittel freigesetzt werden und weil die Klebeschicht die Dampfdurchlässigkeit des Schuhbodens stark vermindert.

Wenn man einen Schuhboden aus Korkteilchen enthaltendem Material - insbesondere einer Kork-Latex-Mischung - in einer geschlossenen Hohlform herstellt, entsteht das Problem, dass es bei der durch die Erwärmung der Hohlform entstehenden Komprimierung des Materials zu einer teilweisen Entmischung der Suspension kommt. Um das zu verhindern, muss das Material aus der Hohlform kontrolliert austreten können, was jedoch die Gefahr mit sich bringt, dass dabei das Obermaterial oder die Decksohle des Schuhes verschmutzt wird. Weiterhin macht es das Austreten des Materials erforderlich, diese ausgetretenen Bereiche möglichst sauber zu entfernen, was zusätzliche Arbeitsgänge erfordert. Die genannte DE 195 11 942 A1 befasst sich nicht mit dem Problem einer Entmischung des Kork-Latex-Gemisches und der Vermeidung einer Kompression dieses Materials in der geschlossenen Form.

Der Erfindung liegt das Problem zugrunde, ein Verfahren der eingangs genannten Art zu entwickeln, welches mit einer besonders einfach gestalteten Hohlform ausgeführt werden kann und bei dem eine Entmischung des Materials für den Schuhbodens durch Vermeidung einer Kompression in der Hohlform ohne Gefahr einer Verunreinigung von Schuhteilen vermieden wird. Weiterhin soll ein nach diesem Verfahren herstellbarer Schuh geschaffen werden.

Das erstgenannte Problem wird erfindungsgemäß dadurch gelöst, dass eine Oberform verwendet wird, bei der zwischen ihrem Rand und der Seitenwand der Hohlform ein Freiraum verbleibt, dass nach dem Aufsetzen der Oberform in diesen Freiraum ein sich zum Inneren der Hohlform hin keilförmig verjüngendes Brillenteil gesetzt wird, welches den Schaft innenseitig gegen die Seitenwand der Hohlform drückt, zum Rand der Oberform hin jedoch einen engen Spalt offen lässt.

Durch das Brillenteil wird zugleich zweierlei erreicht. Zum einen wird der Schaftbereich zuverlässig gegen die Seitenwand gedrückt, so dass keine Gefahr eines Aufsteigens von Schuhbodenmaterial zwischen der Außenseite des Schaftes und der Seitenwand der Hohlform entsteht. Zum anderen verbleibt durch das Brillenteil ein Spalt zwischen der Oberform und dem Brillenteil, durch den Material kontrolliert austreten kann, ohne den Schuh zu verunreinigen. Weiterhin kann das ausgetretene Material beim fertigen Schuh leicht entfernt werden.

Besonders vorteilhaft ist es, wenn gemäß einer Weiterbildung des erfindungsgemäßen Verfahrens nach dem Einsetzen der Bereiche des Schaftes und dem Einfüllen des den Schuhbodens bildenden Materials auf dieses Material eine Decksohle gelegt und dann die Oberform eingesetzt wird, wobei die Decksohle mit einem zur Außenseite der Oberform hin umgeschlagenen Rand gegen die Oberform anliegt, wenn dann das Brillenteil eingesetzt wird, so dass der Schaft gegen den oberen Rand der Seitenwand der Hohlform gedrückt und der enge Spalt zwischen dem Brillenteil und dem umgeschlagenen Rand der Decksohle gebildet wird, und wenn nach der Entnahme des Schuhes aus der Hohlform der umgeschlagene Rand der Decksohle abgeschnitten wird.

Durch diese Verfahrensweise wird eine Verschmutzung des Schaftes und der Decksohle durch austretendes Sohlenmaterial gänzlich ausgeschlossen. Weiterhin kann das ausgetretene Material zusammen mit dem Rand der Decksohle auf einfache Weise sauber abgeschnitten werden.

Die in die Hohlform ragenden Schaftbereiche werden zusätzlich zu der Fixierung durch das Brillenteil an der oberen Kante der Seitenwände der Hohlform am unteren Ende gegen die Seitenwände gehalten, wenn gemäß einer anderen Weiterbildung des erfindungsgemäßen Verfahrens vor dem Eingeben des den Schuhboden bildenden Materials in die Hohlform eine Laufsohle eingelegt wird und die unteren Enden der in die Hohlform ragenden Bereiche des Schaftes durch Fixiermittel auf der Laufsohle an der Seitenwand der Hohlform gehalten werden.

Besonders vorteilhaft ist es, wenn als Material für den Schuhboden ein Kork-Latex-Gemisch verwendet wird.

Das zweitgenannte Problem, nämlich die Schaffung eines Schuhes mit einer einen Schuhboden abdeckenden Laufsohle und einem mit dem Schuhboden verbundenen Schaft, wird erfindungsgemäß dadurch gelöst, dass der Schaft bis zur Laufsohle reicht und die Laufsohle auf der Innenseite des Schaftes nach oben ragende Fixiermittel zum Halten des Schaftes aufweist und dass diese Fixiermittel beim fertigen Schuh vom Material des Schuhbodens abgedeckt sind. Bei einem solchen Schuh sind die für seine einfache Herstellung erforderlichen Fixiermittel nicht zu sehen und stören nicht seinen Tragekomfort. Dennoch können die Fixiermittel sehr einfach gestaltet sein und ein einfaches Einsetzen des Schaftes bei der Herstellung des Schuhes ermöglichen.

Besonders einfach sind die Fixiermittel gestaltet, wenn sie durch nach oben ragende, parallel zum Rand der Laufsohle verlaufende Noppen gebildet sind. Solche Noppen fixieren einerseits den Schaft, ermöglichen es dem Schuhbodenmaterial jedoch problemlos, bis gegen das Material des Schaftes zu gelangen.

Die Erfindung lässt verschiedene Ausführungsformen zu. Zur weiteren verdeutlichung ihres Grundprinzips wird nachfolgend auf die Zeichnung Bezug genommen. Diese zeigt in
- Fig.1: einen Schnitt durch einen Teilbereich einer Hohlform mit darin eingesetzten Teilen eines zu erzeugenden Schuhes,
- Fig.2: eine Draufsicht auf einen Teilbereich einer Laufsohle des Schuhes.

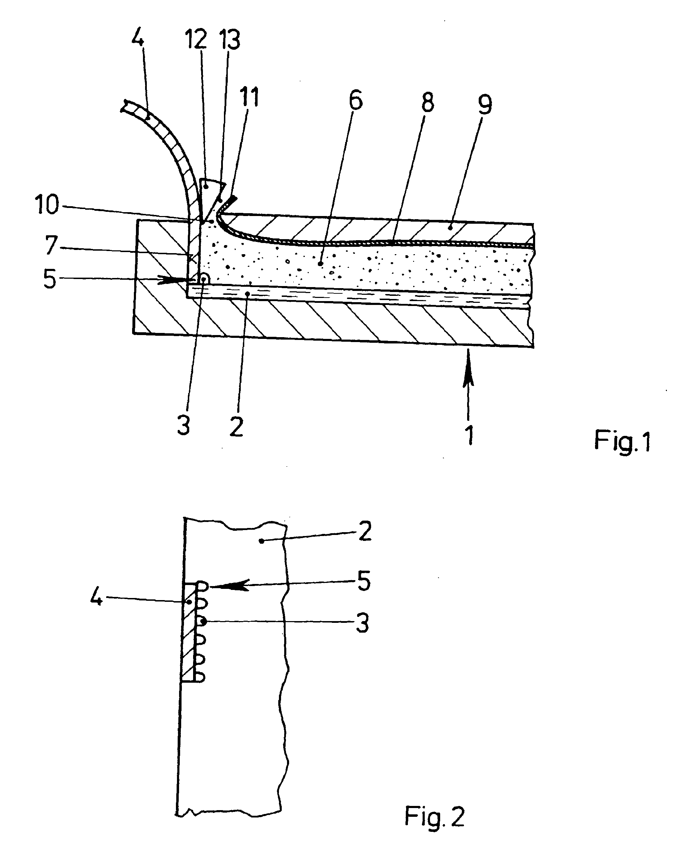

Die Figur 1 zeigt eine Hohlform 1, in die von oben her zunächst eine Laufsohle 2 aus beispielsweise Gummi eingelegt wurde. Diese Laufsohle 2 hat außenseitig in einzelnen Bereichen mit geringem Abstand zu ihrem äußeren Rand nach oben ragende Noppen 3. Diese Noppen 3 bilden für einen Schaft 4 Fixiermittel 5. Die Laufsohle 2 und der Schaft 4 sind durch einen Schuhboden 6 aus beispielsweise Kork-Latex-Gemisch miteinander verbunden.

Zur Herstellung des Schuhes legt man zunächst in die Hohlform 1 die Laufsohle 2 ein. Dann setzt man den Schaft 4, bei dem es sich beispielsweise um die Beriemung einer Sandale handeln kann, derart in die Hohlform ein, dass dieser entlang der Innenseite einer Seitenwand 7 der Hohlform verläuft und durch die Fixiermittel 5 an dieser Seitenwand 7 gehalten wird. Anschließend füllt man zur Bildung des Schuhbodens 6 das Kork-Latex-Gemisch in die Hohlform 1 und setzt auf dieses Schuhbodenmaterial unter Zwischenschaltung einer Decksohle 8 eine Oberform 9 auf. Die Oberform 9 ist so bemessen, dass zwischen ihr und der Seitenwand 7 der Hohlform 1 ein Freiraum 10 verbleibt, der zur einen Seite hin durch den Schaft 4 und zur anderen Seite hin durch einen nach oben hin hochgeschlagenen Rand 11 der Decksohle 8 begrenzt wird. Anschließend setzt man ein Brillenteil 12, welches sich nach unten hin keilförmig verjüngt, in diesen Freiraum 10 ein. Dieses Brillenteil 12 drückt den Schaft 4 nach außen gegen die Seitenwand 7 und ist so bemessen, dass zwischen ihm und dem gegen die Oberform 9 anliegenden Rand 11 der Decksohle 8 ein enger Spalt 13 verbleibt. Durch diesen Spalt 13 kann Kork-Latex-Gemisch nach oben hin austreten, ohne dabei den Schaft 4 oder die Decksohle 8 zu verunreinigen.

Nach dem Entformen des Schuhes schneidet man den Rand 11 mit dem dahinter ausgetretenen Kork-Latex-Gemisch ab, so dass ein sauberer Schuh entsteht.

Die Draufsicht gemäß Figur 2 zeigt einen Teilbereich der Laufsohle 2 mit dem durch die Noppen 3 gebildeten Fixiermittel 5. Zu erkennen ist, dass es sich bei diesem Ausführungsbeispiel um sechs parallel zum Rand der Laufsohle angeordnete Noppen 3 handelt. Zwischen diesen Noppen 3 und dem Rand der Laufsohle 2 ist der Schaft 4 eingesetzt. Der gegenseitige Abstand der Noppen 3 ist so groß, dass auch im Bereich der Noppen 3 Material des Schuhbodens 6 gegen den Schaft 4 gelangt und diesen dadurch zusätzlich zu dem Bereich oberhalb der Noppen 3 am Schuhboden 6 hält.

### Bezugszeichenliste

- 1: Hohlform
- 2: Laufsohle
- 3: Noppen
- 4: Schaft
- 5: Fixiermittel

- 6: Schuhboden
- 7: Seitenwand
- 8: Decksohle
- 9: Oberform
- 10: Freiraum

- 11: Rand
- 12: Brillenteil
- 13: Spalt

## Patentansprüche

1. Verfahren zur Herstellung eines Schuhes, bei dem in eine zur Erzeugung eines Schuhbodens (6) dienende Hohlform (1) Bereiche eines Schaftes (4) ragen und dort durch ein Fixiermittel (5) gegen eine Seitenwand der Hohlform (1) gehalten werden, so dass sich die Bereiche des Schaftes (4) nach dem Einfüllen eines den Schuhboden bildenden, Korkteilchen oder dergleichen enthaltenden Materials und Aufsetzen einer Oberform (9) mit dem Schuhboden (6) verbinden, **dadurch gekennzeichnet, dass** eine Oberform (9) verwendet wird, bei der zwischen ihrem Rand und der Seitenwand der Hohlform (1) ein Freiraum (10) verbleibt, dass nach dem Aufsetzen der Oberform (9) in diesen Freiraum (10) ein sich zum Inneren der Hohlform hin keilförmig verjüngendes Brillenteil (12) gesetzt wird, welches den Schaft (4) innenseitig gegen die Seitenwand der Hohlform (1) drückt, zum Rand der Oberform (9) hin jedoch einen engen Spalt (13) offen lässt.

2. Verfahren nach Anspruch 1, **dadurch gekennzeichnet, dass** nach dem Einsetzen der Bereiche des Schaftes (4) und dem Einfüllen des den Schuhboden bildenden Materials auf dieses Material eine Decksohle (8) gelegt und dann die Oberform (9) eingesetzt wird, wobei die Decksohle (8) mit einem zur Außenseite der Oberform hin umgeschlagenen Rand (11) gegen die Oberform anliegt, dass dann das Brillenteil (12) eingesetzt wird, so dass der Schaft gegen den oberen Rand der Seitenwand der Hohlform (1) gedrückt und der enge Spalt (13) zwischen dem Brillenteil und dem umgeschlagenen Rand (11) der Decksohle gebildet wird, und dass nach der Entnahme des Schuhes aus der Hohlform der umgeschlagene Rand (11) der Decksohle abgeschnitten wird.

3. Verfahren nach zumindest einem der vorangehenden Ansprüche, **dadurch gekennzeichnet, dass** vor dem Eingeben des den Schuhboden bildenden Materials in die Hohlform eine Laufsohle (2) eingelegt wird und die unteren Enden der in die Hohlform (1) ragenden Bereiche des Schaftes durch Fixiermittel (5) auf der Laufsohle an der Seitenwand der Hohlform (1) gehalten werden.

4. Verfahren nach zumindest einem der vorangehenden Ansprüche, **dadurch gekennzeichnet, dass** als Material für den Schuhboden (6) ein Kork-Latex-Gemisch verwendet wird.

5. Schuh mit einer einen Schuhboden (6) abdeckenden Laufaohle (2) und einem mit dem Schuhboden (6) verbundenen Schaft (4), wobei die verbindung der Laufsohle mit dem Schuhboden nach dem Einfüllen eines den Schuhboden bildenden, Korkteilchen oder dergleichen enthaltenden Materials und Aufsetzen einer Oberform entstanden ist, **dadurch gekennzeichnet, dass** der Schaft (4) bis zur Laufsohle (2) reicht und die Laufaohle (2) auf der Innenseite des Schaftes (4) nach oben ragende Fixiermittel (5) zum Halten des Schaftes (4) aufweist und dass diese Fixiermittel (5) beim fertigen Schuh vom Material des Schuhbodens (6) abgedeckt sind.

6. Schuh nach Anspruch 5, **dadurch gekennzeichnet, dass** die Fixiermittel (5) durch nach oben ragende, parallel zum Rand der Laufsohle (2) verlaufende Noppen (3) gebildet sind.

## Claims

1. A method for manufacturing a shoe, in which regions of an upper (4) protrude into a hollow mould (1) used to manufacture a shoe bottom (6) and are held there against a side wall of the hollow mould (1) by a fixation means (5), so that after filling with a material containing cork particles or the like, forming the shoe bottom, and after positioning an upper mould (9), the regions of the upper (4) bond to the shoe bottom (6), **characterised in that** an upper mould (9) is used in which a clearance (10) remains between its edge and the side wall of the hollow mould (1), **in that** after positioning the upper mould (9) a wedge-shaped element (12) tapering towards the interior of the hollow mould is inserted into this clearance (10) and which presses the upper (4) on the inside against the side wall of the hollow mould (1) but leaves a narrow gap (13) open towards the edge of the upper mould (9).

2. The method according to claim 1, **characterised in that** after the insertion of the regions of the upper (4) and filling with the material forming the shoe bottom, an insole (8) is placed onto this material and the upper mould (9) is then inserted, the insole (8) bearing against the upper mould with an edge (11) turned up towards the exterior of the upper mould, **in that** the wedge-shaped element (12) is then inserted, such that the upper is pressed against the upper edge of the side wall of the hollow mould (1) and the narrow gap (13) is formed between the wedge-shaped element and the turned-up edge (11) of the insole, and **in that** after the removal of the shoe from the hollow mould, the turned-up edge (11) of the insole is trimmed.

3. The method according to at least one of the preceding claims, **characterised in that** before introducing the material forming the shoe bottom, an outsole (2) is inserted into the hollow mould and the lower ends of the regions of the upper protruding into the hollow mould (1) are held against the side wall of the hollow mould (1) by fixation means (5) on the outsole.

4. The method according to at least one of the preceding claims, **characterised in that** a cork-latex mixture is used as a material for the shoe bottom (6).

5. A shoe with an outsole (2) covering a shoe bottom (6) and an upper (4) bonded to the shoe bottom (6), the bonding of the outsole to the shoe bottom taking place after filling with a material containing cork particles or the like, forming the shoe bottom, and after positioning an upper mould, **characterised in that** the upper (4) reaches as far as the outsole (2) and the outsole (2) comprises upwardly protruding fixation means (5) on the inside of the upper (4) for holding the upper (4) and **in that** these fixation means (5) are covered by the material of the shoe bottom (6) in the finished shoe.

6. The shoe according to claim 5, **characterised in that** the fixation means (5) are formed by upwardly protruding nubs (3) extending parallel to the edge of the outsole (2).

## Revendications

1. Procédé pour fabriquer une chaussure, dans lequel des zones d'une tige (4) dépassent dans une forme creuse (1) servant à générer un semelage (6) et sont maintenues ici par un moyen de fixation (5) contre une paroi latérale de la forme creuse (1), de sorte que les zones de la tige (4) se relient après le remplissage avec un matériau formant le semelage, contenant des particules de liège ou similaire et la pose d'une forme supérieure (9) avec le semelage (6), **caractérisé en ce qu'**on utilise une forme supérieure (9), sur laquelle un espace libre (10) reste entre son bord et la paroi latérale de la forme creuse (1), **en ce que**, après la pose de la forme supérieure (9) dans cet espace libre (10), on place une partie de lunette (12) se rétrécissant en forme de clavette en direction de l'intérieur de la forme creuse, laquelle partie appuie la tige (4) côté intérieur contre la paroi latérale de la forme creuse (1), mais laisse ouverte une fente (13) étroite en direction du bord de la forme supérieure (9).

2. Procédé selon la revendication 1, **caractérisé en ce que**, après l'insertion des zones de la tige (4) et le versement du matériau formant le semelage sur ce matériau, une première intérieure (8) est posée et la forme supérieure (9) est insérée ensuite, la première intérieure (8) avec un bord (11) retourné en direction du côté extérieur de la forme supérieure étant appliqué contre la forme supérieure, **en ce que** la partie de lunette (12) est insérée alors de telle sorte que la tige est appuyée contre le bord supérieur de la paroi latérale de la forme creuse (1) et la fente (13) étroite est formée entre la partie de lunettes et le bord (11) retourné de la première intérieure, et **en ce que**, après le prélèvement de la chaussure de la forme creuse, le bord (11) retourné de la première intérieure est découpé.

3. Procédé selon au moins l'une quelconque des revendications précédentes, **caractérisé en ce que**, avant l'introduction du matériau formant le semelage dans la forme creuse, une semelle de marche (2) est insérée et les extrémités inférieures des zones, dépassant dans la forme creuse (1), de la tige sont maintenues par des moyens de fixation (5) sur la semelle de marche sur la paroi latérale de la forme creuse (1).

4. Procédé selon au moins l'une quelconque des revendications précédentes, **caractérisé en ce qu'**un mélange de liège et de latex est utilisé comme matériau pour le semelage (6).

5. Chaussure comprenant une semelle de marche (2) recouvrant un semelage (6) et une tige (4) reliée au semelage (6), la liaison de la semelle de marche avec le semelage étant effectuée après le versement d'un matériau formant le semelage contenant des particules de liège ou similaire et la pose d'une forme supérieure, **caractérisée en ce que** la tige (4) va jusqu'à la semelle de marche (2) et la semelle de marche (2) présente sur le côté intérieur de la tige (4) des moyens de fixation (5) dépassant vers le haut pour le maintien de la tige (4) et **en ce que** ces moyens de fixation (5) sont recouverts sur la chaussure terminée par le matériau du semelage (6).

6. Chaussure selon la revendication 5, **caractérisée en ce que** les moyens de fixation (5) sont formés par des nopes (3) dépassant vers le haut, agencées parallèlement au bord de la semelle de marche (2).
